# EUROPEAN PATENT APPLICATION

(11) **EP 4 184 655 A1**
(43) Date of publication of application: **24.05.2023**
(21) Application number: 22849752.5
(22) Date of filing: 11.07.2022
(51) Int. Cl.: H01M 10/48, H01M 10/058, H01M 10/052, H01M 10/44

(54) **LITHIUM SECONDARY BATTERY AND MANUFACTURING METHOD THEREFOR**

(30) Priority: 29.07.2021 KR 20210100117
(71) Applicant: LG Energy Solution, Ltd., Seoul 07335 (KR)
(72) Inventor: PARK, Jun Soo, Daejeon 34122 (KR); KIM, Hye Bin, Daejeon 34122 (KR); LEE, Su Rim, Daejeon 34122 (KR)
(74) Representative: Plasseraud IP
(86) International application number: PCT/KR2022/010050
(87) International publication number: WO 2023/008775

(57) **Abstract**

Discussed is a lithium secondary battery and a method of manufacturing the lithium secondary battery. The lithium secondary battery may include an electrode assembly including a positive electrode, a negative electrode, and a separator positioned between the positive electrode and the negative electrode, wherein the negative electrode includes a negative electrode current collector and a negative electrode mixture layer, the negative electrode mixture layer being formed between the negative electrode current collector and the separator, and wherein a detection probe containing a metal oxide has a potential plateau of 1.3 V to 1.8 V is provided on a side surface of the negative electrode mixture layer.

## Description

### [Technical Field]

The present invention relates to a lithium secondary battery and a method of manufacturing the same.

This application claims the benefit of priority based on Korean Patent Application No. 10-2021-0100117, filed on July 29, 2021, and the entire contents of the Korean patent application are incorporated herein by reference.

### [Background Technology of the Invention]

As development and demand for technology for mobile devices increase, the demand for secondary batteries serving as energy sources is rapidly increasing. Among these secondary batteries, lithium secondary batteries having a high energy density and operating potential, a long cycle life, and a low self-discharge rate have been commercialized and widely used.

Recently, as lithium secondary batteries are used as power sources for medium and large-sized devices such as electric vehicles, the lithium secondary batteries are further required to have a high capacity, a high energy density, and a low cost. As such a high-performance secondary battery and/or a secondary battery for a vehicle, a lithium secondary battery is the most realistic technology. A lithium secondary battery functions as a battery by repeating intercalation and deintercalation of lithium ions into and from a negative electrode and a positive electrode. Between these electrodes, there is a lithium salt-containing electrolyte in which lithium ions can move but electrons cannot move.

Although many studies are being conducted on such secondary batteries in terms of high capacity and high density, improvement of lifetime and safety are also important. For the improvement of lifetime and safety, it is necessary to suppress a decomposition reaction with an electrolyte on a surface of an electrode and to prevent overcharge/discharge. In particular, it is necessary to prevent lithium from being deposited on a surface of a negative electrode, so-called lithium-plating. When lithium metal is deposited, it causes a side reaction with the electrolyte and a change in kinetic balance of the secondary battery, which can cause the degradation of the secondary battery such as capacity loss or the like, to affect the lifetime of the secondary battery and cause safety problems such as loss of an overcharge control function.

Such deposition of the lithium metal may occur when a positive electrode mixture layer is misaligned with a negative electrode mixture layer during lamination of a positive electrode and a negative electrode in a manufacturing process of a lithium secondary battery, and the lithium metal deposited in this way is continuously generated during a charging and discharging process of the battery. In order to solve the above problem, it is necessary to detect whether the lithium metal is deposited in real time in the manufacturing process of the lithium secondary battery.

However, conventionally, in a secondary battery, it is very difficult to detect whether lithium metal is deposited in real time. As conventional techniques for non-destructively detecting whether lithium metal is deposited on a negative electrode, there are discharge at low temperature, thermal capacity analysis, thickness increase analysis, and the like. However, in all of the above techniques, since measurement is not possible while the secondary battery is being driven, there is a limit in real-time detecting lithium metal deposited on a negative electrode.

### [Document of Related Art]

### [Patent Document]

Korean Laid-open Patent Publication No. 10-2017-0023583

### [Description of the Invention]

### [Technical Problem]

The present invention is intended to solve at least some of the above problems. For example, an aspect of the present invention provides a lithium secondary battery capable of non-destructively checking whether lithium metal, which may be generated in a negative electrode of the lithium secondary battery, is deposited in real time, and a method of manufacturing the same.

### [Technical Solution]

A lithium secondary battery of the present invention for solving the above problems may include an electrode assembly including a positive electrode, a negative electrode, and a separator positioned between the positive electrode and the negative electrode, wherein the negative electrode includes a negative electrode current collector and a negative electrode mixture layer, the negative electrode mixture layer being formed between the negative electrode current collector and the separator, and wherein a detection probe containing a metal oxide has a potential plateau of 1.3 V to 1.8 V is provided on a side surface of the negative electrode mixture layer.

Here, the detection probe may have a wire structure including a core wire that includes a conductive metal and a metal oxide layer that surrounds the core wire.

The detection probe may have an average diameter of 10 to 200 µm, and the average diameter thereof may be smaller than an average thickness of the negative electrode mixture layer.

The detection probe may be disposed to be spaced 0.1 to 2,000 µm from the side surface of the negative electrode mixture layer.

The metal oxide contained in the detection probe may contain an oxide containing one or more metals selected from the group consisting of titanium, vanadium, iron, cobalt, nickel, copper, molybdenum, tungsten, and niobium.

The metal oxide may be a lithium titanate compound represented by Chemical Formula 1 below:

[Chemical Formula 1] LiₐTi_{b}M_{c}O_{d}

wherein M is Sn, Cr, Y, Nb, Mg, Zn, Ni, V, Na, K, Ca, Co, Ta, Mo, Zr, Al, Cu, Mn, or Bi, a is an integer satisfying 0.4≤a≤5, b is an integer satisfying 0.5≤b≤5.5, c is an integer satisfying 0≤c≤0.9, and d is an integer satisfying 1.5≤d≤12.5.

The detection probe may contain a metal oxide charged to a state of charge (SoC) of 40% to 60%.

A method of manufacturing a lithium secondary battery of the present invention includes: inserting an electrode assembly including a positive electrode, a negative electrode, and a separator positioned between the positive electrode and the negative electrode into a case of the lithium secondary battery and placing a detection probe containing a metal oxide having a potential plateau of 1.3 V to 1.8 V on a side surface of a negative electrode mixture layer of the negative electrode to assemble the lithium secondary battery; filling the case of the assembled lithium secondary battery with an electrolyte; charging the lithium secondary battery filled with the electrolyte; and measuring a potential of the detection probe provided in the lithium secondary battery.

The detection probe may be charged to an SoC of 40% to 60%.

The method of manufacturing the lithium secondary battery may further include, after the measuring of the potential of the detection probe, when the measured potential of the detection probe exceeds 2.0 V, determining that the lithium secondary battery is defective.

### [Advantageous Effects]

In a lithium secondary battery according to the present invention, by providing a detection probe including a metal oxide having a potential plateau of 1.3 to 1.8 V on a side surface of a mixture layer of a negative electrode, it is possible to non-destructively check in real time whether lithium metal, which may be generated in the negative electrode, is deposited during initial charging of the lithium secondary battery. Accordingly, according to the present invention, it is possible to reduce a defect rate in the manufacture of the lithium secondary battery and improve the degradation of the lithium secondary battery such as capacity loss or the like to increase the lifetime and improve the safety of the lithium secondary battery.

### [Brief Description of the Drawings]

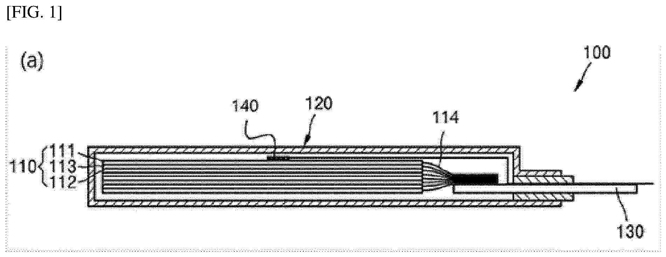

FIG. 1 is a schematic diagram illustrating a structure of a lithium secondary battery of Comparative Example 2 according to the present invention.
FIG. 2 is a schematic diagram illustrating a structure of a lithium secondary battery of Example 1 according to the present invention.
FIG. 3 is an image showing a position of a side surface, at which a detection probe may be disposed, among side surfaces of a negative electrode mixture layer.

FIG. 4 is a graph showing changes in potential of detection probes provided in lithium secondary batteries of Example 4 according to the present invention and a control group during initial charging.

### [Best Mode for Carrying Out the Invention]

While the present invention may have various modifications and alternative forms, specific embodiments thereof will be described in detail.

However, it should be understood that there is no intent to limit the present invention to the particular forms disclosed, and on the contrary, the present invention is to cover all modifications, equivalents, and alternatives falling within the spirit and scope of the present invention.

It should be further understood that the terms "comprise," "comprising," "include," and/or "including," when used herein, specify the presence of stated features, integers, steps, operations, components, parts, or combinations thereof, but do not preclude the presence or addition of one or more other features, integers, steps, operations, components, parts, or combinations thereof.

In addition, when a layer, film, region, or plate is referred to as being "formed on" another layer, film, region, or plate, it includes a case in which the layer, film, region, or plate is formed directly on another layer, film, region, or plate and a case in which still another layer, film, region, or plate is interposed between the layer, film, region, or plate and another layer, film, region, or plate. In contrast, when a layer, film, region, or plate is referred to as being "formed below" another layer, film, region, or plate, it includes a case in which the layer, film, region, or plate is formed directly below another layer, film, region, or plate and a case in which still another layer, film, region, or plate is interposed between the layer, film, region, or plate and another layer, film, region, or plate. Further, in this specification, when a component is referred to as being disposed "on" another component, it includes a case in which a component is disposed above another component and a case in which a component is disposed below another component.

In addition, in the present invention, the term "main component" may be a component in an amount of 50 wt% or more, 60 wt% or more, 70 wt% or more, 80 wt% or more, 90 wt% or more, 95 wt% or more, or 97.5 wt% or more with respect to a total weight of a composition or a specific component, and in some cases, may be a component constituting the total amount of the composition or specific component, that is, a component in an amount of 100 wt%.

Hereinafter, the present invention will be described in more detail.

### Lithium secondary battery

In an embodiment, the present invention provides a lithium secondary battery including an electrode assembly including a positive electrode, a negative electrode, and a separator positioned between the positive electrode and the negative electrode, wherein the negative electrode includes a negative electrode current collector and a negative electrode mixture layer formed between the negative electrode current collector and the separator, and a detection probe containing a metal oxide having a potential plateau of 1.3 V to 1.8 V is provided on a side surface of the negative electrode mixture layer.

The present invention relates to a lithium secondary battery, wherein the lithium secondary battery has a configuration including an electrode assembly including a positive electrode, a negative electrode, and a separator positioned between the positive electrode and the negative electrode.

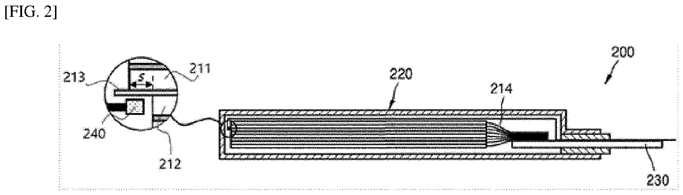

In this case, a detection probe may be provided on a side surface of a negative electrode mixture layer of the negative electrode provided in the electrode assembly, specifically, at an end portion of the side surface of the negative electrode mixture layer, which is exposed without being in contact with the separator and the negative electrode current collector, as illustrated in FIG. 2, that is, at a sliding interface of the negative electrode mixture layer, wherein the detection probe may perform a function of detecting lithium metal deposited on the negative electrode mixture layer in real time in a non-destructive manner during initial charging of the lithium secondary battery.

More specifically, when a positive electrode mixture layer containing a positive electrode active material is misaligned with the negative electrode mixture layer during lamination, for example, when the negative electrode is laminated so as not to cover an entire surface of the positive electrode and is tilted to one side during the lamination process of the positive electrode and the negative electrode, a portion of the positive electrode mixture layer may be exposed. In this way, when the portion of the positive electrode mixture layer is exposed, lithium ions may be deposited on a side of the separator without the negative electrode during the charging process of the battery. The lithium metal deposited in this way is continuously generated during a charging and discharging process of the battery, grows into a dendritic form, and not only causes a short inside the battery, but also causes a violent exothermic reaction when exposed to moisture, thereby significantly reducing the safety of the battery. Therefore, in order to check the deposition of the lithium metal in the related art, it is necessary to separate battery cells from a battery pack and perform computed tomography (CT) analysis on the separated battery cells or to disassemble the battery cells, and thus there is a problem in that a lot of money and time are consumed and it is difficult to check whether the lithium metal is deposited while the lithium secondary battery and or a battery module having the same are being used. However, in the lithium secondary battery according to the present invention, by introducing the detection probe containing the metal oxide on the side surface of the negative electrode mixture layer, it is possible to easily check whether the lithium metal is deposited on the negative electrode in real time without separating the battery cells accommodated in the battery pack to perform a CT scan or disassembling the battery cells.

To this end, the detection probe may include a metal oxide having a potential plateau of 1.3 V to 1.8 V, and specifically, may include a metal oxide having a potential plateau of 1.3 V to 1.7 V, 1.3 V to 1.6 V, 1.4 V to 1.7 V, 1.4 V to 1.6 V, 1.4 V to 1.8 V, or 1.45 V to 1.55 V. The term "potential plateau" is a region of a reversible capacity region, in which a potential of an active material is constantly maintained, except for initial and/or end stages during charging and discharging of the secondary battery, and is a section in which an absolute value of a slope of a charge/discharge profile in a charge/discharge curve is close to zero.

The metal oxide may include an oxide containing one or more metals selected from the group consisting of titanium, manganese, iron, cobalt, nickel, copper, molybdenum, tungsten, and niobium. For example, a metal oxide such as TiO₂, MnO₂, Fe₂O₃, Fe₃O₄, CoO, Co₃O₄, MoOs, NiO, CuO, WO₃, MoO₂, Nb₂O₅, or the like may be used alone or in combination as the metal oxide having a potential plateau of 1.3 V to 1.8 V to constitute the detection probe

Further, the detection probe may include a lithium titanate compound represented by Chemical Formula 1 below as a metal oxide.

[Chemical Formula 1] LiₐTi_{b}M_{c}O_{d}

In Chemical Formula 1 above, M is Sn, Cr, Y, Nb, Mg, Zn, Ni, V, Na, K, Ca, Co, Ta, Mo, Zr, Al, Cu, Mn, or Bi, A is an integer satisfying 0.4≤a≤5, b is an integer satisfying 0.5≤b≤5.5, c is an integer satisfying 0≤c≤0.9, and d is an integer satisfying 1.5≤d≤12.5.

The lithium titanate compound represented by Chemical Formula 1 above may have a potential plateau of about 1.4 V to 1.7 V, and LiTiO, Li_{0.5}TiO₂, Li₂TiO₃, Li₂Ti₃O₇, Li₄Ti₅O₁₂, and the like may be used alone or two or more thereof may be used in combination.

As an example, the electrode assembly according to the present invention may include a detection probe containing Li₄Ti₅O₁₂ on one surface of the separator in contact with the negative electrode mixture layer.

In addition, the detection probe may be charged such that a state of charge (SoC) of the metal oxide becomes 40% to 60%, and specifically, becomes 45% to 60%, 40% to 55%, or 45% to 55%. The detection probe of the present invention exhibits a potential plateau of 1.3 V to 1.8 V, and when the lithium metal deposited on the negative electrode comes into contact with a surface thereof, the potential is significantly increased. To this end, the SoC may be adjusted to be 40% to 60% so that the potential plateau of the detection probe may be stably implemented, and the detection probe may be electrically connected to a battery management system (BMS) which is provided in the lithium secondary battery to monitor the state of charge (SoC) of the electrode in real time.

The detection probe may have a wire structure including a core wire that includes a conductive metal and a metal oxide layer that surrounds the core wire, for charging of the metal oxide described above. Specifically, the detection probe is not particularly limited as long as it is a conductive wire commonly applied in the art and may include a core wire. For example, the core wire may include a wire-type line including one or more metals selected from the group consisting of copper, brass, zinc, aluminum, gold, and silver. Further, the core wire may include a coating layer, that is, a metal oxide layer, the surface of which is coated with a metal oxide having a potential plateau of 1.3 to 1.8 V. In addition, the metal oxide layer may be positioned at an end of the detection probe, and a portion on which the metal oxide layer is not formed may have an insulating coating form.

As an example, the detection probe may be a wire electrode including a Li₄Ti₅O₁₂ (LTO) layer formed by coating a surface of a copper conductive wire with a LTO slurry.

Further, the detection probe may have an average diameter of 10 µm to 200 µm. Specifically, the detection probe may have an average diameter of 10 µm to 200 µm, 50 µm to 200 µm, 80 µm to 200 µm, 100 µm to 200 µm, 120 µm to 200 µm, 150 µm to 200 µm, 10 µm to 150 µm, 10 µm to 120 µm, 10 µm to 100 µm, 50 µm to 150 µm, 80 µm to 190 µm, or 110 µm to 180 µm.

In addition, the average diameter of the detection probe may be smaller than an average thickness of the negative electrode mixture layer. Specifically, the detection probe may have an average diameter of 20% to 99% with respect to the average thickness of the negative electrode mixture layer, and more specifically, may have an average diameter of 30% to 99%, 40% to 99%, 50% to 99%, 60% to 99%, 30% to 95%, 40% to 95%, 50% to 95%, 50% to 90%, or 60% to 90% with respect to the average thickness of the negative electrode mixture layer.

In the present invention, by controlling the average diameter of the detection probe within the above range, it is possible to prevent the detection probe from coming into contact with a material other than the deposited lithium metal to cause a short, or from being unable to detect the deposited lithium metal due to loss of charge before the deposited lithium metal comes into contact with the detection probe.

FIG. 2 is a schematic diagram illustrating a structure of a lithium secondary battery 200 according to the present invention. As illustrated in FIG. 2, a detection probe 240 may be disposed to be spaced a predetermined distance from a side surface of a negative electrode mixture layer 212, specifically, from an interface of a sliding part of the negative electrode mixture layer 212. Specifically, lithium metal is generated in a negative electrode during a charging process of the lithium secondary battery 200, and, in particular, when a misalignment s occurs between a positive electrode mixture layer 211 of a positive electrode and the negative electrode mixture layer 212 of the negative electrode which are laminated with a separator 213 disposed therebetween, a large amount of lithium metal is generated on the side surface of the negative electrode mixture layer 212. Since the lithium metal deposited in this way may grow into a dendritic form and cause an internal short or a violent exothermic reaction at an end of the electrode, the detection probe 240 may be disposed to be spaced a predetermined distance from the side surface of the negative electrode mixture layer 212 in order to detect the lithium metal in real time in a non-destructive manner.

For example, the detection probe may be disposed on a side surface of a mixture layer to be spaced a distance of 0.1 µm to 2,000 µm from the side surface of the negative electrode mixture layer, and specifically, may be disposed on the side surface of the mixture layer to be spaced a distance of 5 µm to 1,500 µm, 10 µm to 1,000 µm, 10 µm to 500 µm, 10 µm to 250 µm, 10 µm to 200 µm, 10 µm to 100 µm, 10 µm to 80 µm, 50 µm to 200 µm, 100 µm to 200 µm, 30 µm to 80 µm, or 10 µm to 50 µm from the side surface of the negative electrode mixture layer.

The detection probe may be disposed on any side surface of the negative electrode mixture layer without any particular limitation on its position.

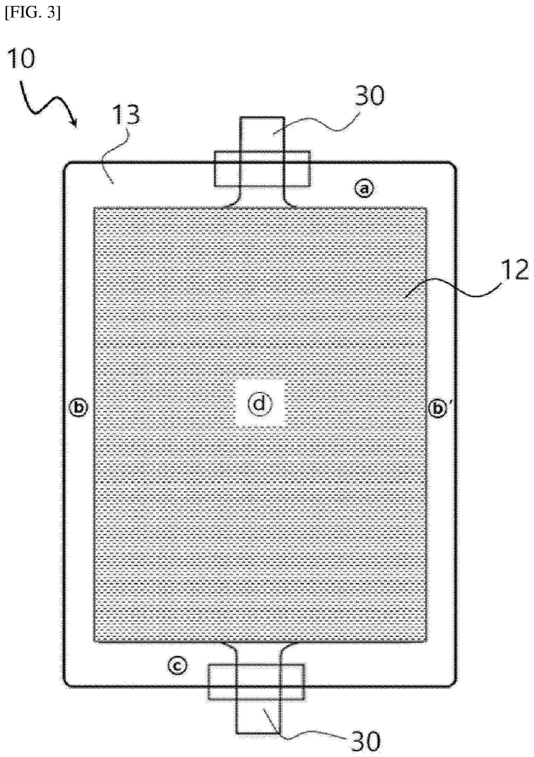

FIG. 3 is an image showing a position of a side surface, at which a detection probe may be disposed, among side surfaces of a negative electrode mixture layer 12 provided in an electrode assembly 10. Referring to FIG. 3, when an electrode tab (not illustrated) is formed on a side surface ⓐ among the side surfaces of the negative electrode mixture layer 12, the detection probe may be disposed on a side surface ⓒ, which is a surface opposite to the side surface ⓐ, or may be disposed on a side surface ⓑ and/or ⓑ' adjacent to the side surface ⓐ on which the electrode tab is formed, and, in some cases, the detection probe may be disposed so as not to be contact with the electrode tab formed on the side surface ⓐ on which the electrode tab is formed.

Further, the detection probe may be introduced on at least one of the side surfaces of the negative electrode mixture layer, and for this purpose, one or more electrodes may be provided in the lithium secondary battery. For example, referring to FIG. 3, when the lithium secondary battery is a pouch-type battery, one detection probe may be introduced on the side surface ⓒ, which is a surface opposite to the side surface ⓐ on which the electrode tab is formed, and another detection probe may be introduced on the side surface ⓑ and/or ⓑ' adjacent to the side surface ⓐ on which the electrode tab is formed.

Meanwhile, a positive electrode provided in the lithium secondary battery according to the present invention includes a positive electrode mixture layer formed on at least one surface of a positive electrode current collector, and the positive electrode mixture layer includes a lithium metal composite oxide represented by Chemical Formula 2 below as a positive electrode active material capable of reversible intercalation and deintercalation.

[Chemical Formula 2] Liₓ[Ni_{y}Co_{z}Mn_{w}M¹ᵥ]Oᵤ

In Chemical Formula 2 above, M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and x, y, z, w, v, and u are 1.0≤x≤1.30, 0≤y<0.95, 0<z<0.5, 0<w≤0.5, 0≤v≤0.2, and 1.5≤u≤4.5, respectively.

The lithium metal composite oxide represented by Chemical Formula 2 above is a composite metal oxide containing lithium and nickel, and may include one or more compounds selected from the group consisting of LiCoO₂, LiCo_{0.5}Zn_{0.5}O₂, LiCo_{0.7}Zn_{0.3}O₂, LiNiO₂, LiNi_{0.5}Co_{0.5}O₂, LiNi_{0.6}Co_{0.4}O₂, LiNi_{1/3}Co_{1/3}Al_{1/3}O₂, LiMnO₂, LiNi_{1/3}Co_{1/3}Mn_{1/3}O₂, LiNi_{0.8}Co_{0.1}Mn_{0.1}O₂, LiNi_{0.6}Co_{0.2}Mn_{0.2}O₂, LiNi_{0.9}Co_{0.05}Mn_{0.05}O₂, LiNi_{0.6}Co_{0.2}Mn_{0.1}Al_{0.1}O₂, and LiNi_{0.7}Co_{0.1}Mn_{0.1}Al_{0.1}O₂. As an example, as the positive electrode active material that is the lithium metal composite oxide represented by Chemical Formula 2 above, LiNi_{1/3}Co_{1/3}Mn_{1/3}O₂, LiNi_{0.8}Co_{0.1}Mn_{0.1}O₂, or LiNi_{0.6}Co_{0.2}Mn_{0.2}O₂ may be used alone or in combination.

Further, an amount of the positive electrode active material may range from 85 to 95 parts by weight with respect to 100 parts by weight of the positive electrode mixture layer, and specifically, may range from 88 to 95 parts by weight, 90 to 95 parts by weight, 86 to 90 parts by weight, or 92 to 95 parts by weight.

In addition, the positive electrode mixture layer may further include a conductive material, a binder, other additives, or the like together with the positive electrode active material.

In this case, the conductive material may be used to improve the electrical performance of the positive electrode, and may include one or more carbon-based materials selected from the group consisting of natural graphite, artificial graphite, carbon black, acetylene black, Ketjen black, and carbon fibers. For example, the conductive material may include acetylene black.

Further, the conductive material may be included in an amount of 1 to 5 parts by weight with respect to 100 parts by weight of the positive electrode mixture layer, and specifically, may be included in an amount of 1 to 4 parts by weight, 2 to 4 parts by weight, 1.5 to 5 parts by weight, or 1 to 3 parts by weight.

In addition, the binder may include one or more resins selected from the group consisting of a polyvinylidene fluoride-hexafluoropropylene copolymer (PVdF-co-HFP), polyvinylidene fluoride (PVdF), polyacrylonitrile, polymethylmethacrylate, and copolymers thereof. As an example, the binder may include PVdF.

Further, the binder may be included in an amount of 1 to 10 parts by weight with respect to 100 parts by weight of the total amount of the positive electrode mixture layer, and specifically, may be included in an amount of 2 to 8 parts by weight, 2 to 6 parts by weight, 1 to 5 parts by weight, or 2 to 4 parts by weight.

In addition, as the positive electrode current collector of the positive electrode, a material having high conductivity without causing a chemical change in the battery may be used. For example, stainless steel, aluminum, nickel, titanium, calcined carbon, or the like may be used, and when aluminum or stainless steel is used, a material surface-treated with carbon, nickel, titanium, silver, or the like may be used. Further, the positive electrode current collector may have fine irregularities formed on a surface thereof to increase an adhesive force of the positive electrode active material, and may be formed in various forms such as a film, a sheet, a foil, a net, a porous body, a foam body, a nonwoven body, and the like. In addition, an average thickness of the positive electrode current collector may be appropriately applied in a range of 1 to 500 µm in consideration of the conductivity and total thickness of the positive electrode to be manufactured.

Further, the negative electrode provided in the lithium secondary battery according to the present invention includes a negative electrode mixture layer formed on at least one surface of a negative electrode current collector, and the negative electrode mixture layer may be manufactured by coating, drying, and pressing a negative electrode active material.

Here, the negative electrode active material is not particularly limited as long as it is commonly used as a negative electrode active material in the art, and specifically, may include a carbon material and a silicon (Si)-containing material. The carbon material is a carbon material containing a carbon element as a main component, and examples of the carbon material may include graphite with a completely layered crystal structure like natural graphite, soft carbon having a low crystallinity layered crystal structure (graphene structure; a structure in which hexagonal honeycomb planes of carbon are arranged in layers), hard carbon in which these structures are mixed with amorphous parts, artificial graphite, expanded graphite, carbon fiber, non-graphitizable carbon, carbon black, acetylene black, Ketjen black, carbon nanotubes, fullerenes, activated carbon, graphene, carbon nanotubes, and the like, and preferably, may include one or more materials selected from the group consisting of natural graphite, artificial graphite, graphene, and carbon nanotubes. More preferably, the carbon material may include natural graphite and/or artificial graphite, and may further include any one or more of graphene and carbon nanotubes together with the natural graphite and/or artificial graphite. In this case, the carbon material may include 0.1 to 10 parts by weight of graphene and/or carbon nanotubes with respect to 100 parts by weight of the total amount of the carbon material, and more specifically, may include 0.1 to 5 parts by weight or 0.1 to 2 parts by weight of graphene and/or carbon nanotubes with respect to 100 parts by weight of the total amount of the carbon material.

Further, the silicon (Si)-containing material is a material containing silicon (Si), which is a metal component, as a main component, and silicon (Si), silicon monoxide (SiO), or silicon dioxide (SiO₂) may be used alone or in combination. When silicon monoxide (SiO) and silicon dioxide (SiO₂) serving as the silicon (Si)-containing material are included in the negative electrode mixture layer by being uniformly mixed or complexed, the silicon monoxide (SiO) and the silicon dioxide (SiO₂) may be expressed as silicon oxide (SiOₓ, here 1≤x≤2). In addition, when the silicon (Si)-containing material has a form in which silicon monoxide (SiO) particles and silicon dioxide (SiO₂) particles are uniformly mixed, the particles may have a form of crystalline particles, and when silicon monoxide (SiO) particles and silicon dioxide (SiO₂) particles have a complex form, the particles may have a form of crystalline particles or amorphous particles. In this case, a proportion of the amorphous particles may range from 50 to 100 parts by weight with respect to 100 parts by weight of the total amount of the silicon (Si)-containing material, and specifically, may range from 50 to 90 parts by weight, 60 to 80 parts by weight of or 85 to 100 parts by weight. In the present invention, by controlling the proportion of the amorphous particles contained in the silicon (Si)-containing material within the above range, thermal stability and flexibility can be improved in a range in which the electrical properties of the electrode are not degraded.

In addition, the negative electrode active material may include a carbon material and a silicon (Si)-containing material, and may include 75 to 99 parts by weight of the carbon material and 1 to 25 parts by weight of the silicon (Si)-containing material with respect to 100 parts by weight of the total amount of the negative electrode active material. More specifically, the negative electrode active material may contain 80 to 95 parts by weight of the carbon material and 5 to 20 parts by weight of the silicon (Si)-containing material, 90 to 97 parts by weight of the carbon material and 3 to 10 parts by weight of the silicon (Si)-containing material, 85 to 92 parts by weight of the carbon material and 8 to 15 parts by weight of the silicon (Si)-containing material, 82 to 87 parts by weight of the carbon material and 13 to 18 parts by weight of the silicon (Si)-containing material, or 93 to 98 parts by weight of the carbon material and 2 to 7 parts by weight of the silicon (Si)-containing material with respect to 100 parts by weight of the total amount of the negative electrode active material. In the present invention, by adjusting the amounts of the carbon material and the silicon (Si)-containing material contained in the negative electrode active material within the above range, the charging capacity per unit mass can be improved while reducing lithium consumption and irreversible capacity loss during initial charging and discharging of the battery.

In addition, the negative electrode current collector is not particularly limited as long as it has high conductivity without causing a chemical change in the battery, and for example, copper, stainless steel, nickel, titanium, calcined carbon, or the like may be used, and when copper or stainless steel is used, a material surface-treated with carbon, nickel, titanium, silver, or the like may be used. Further, the negative electrode current collector, like the positive electrode current collector, may have fine irregularities formed on a surface thereof to strengthen a bonding force with the negative electrode active material, and may be formed in various forms such as a film, a sheet, a foil, a net, a porous body, a foam body, a nonwoven body, and the like. In addition, an average thickness of the negative electrode current collector may be appropriately applied in a range of 1 to 500 µm in consideration of the conductivity and total thickness of a negative electrode to be manufactured.

Further, in the electrode assembly for the lithium secondary battery according to the present invention, the average thickness of the mixture layers respectively constituting the positive electrode and the negative electrode and/or an average area ratio between the mixture layers may be controlled within a predetermined range.

Specifically, the average thickness of the positive electrode mixture layer may range from 50 µm to 300 µm, and more specifically, may range from 100 µm to 200 µm, 80 µm to 150 µm, 120 µm to 170 µm, 150 µm to 300 µm, 200 µm to 300 µm, 150 µm to 190 µm, 130 µm to 160 µm, 100 µm to 150 µm, or 110 µm to 160 µm.

Further, the negative electrode mixture layer may have an average thickness of 100 µm to 300 µm, and more specifically, may have an average thickness of 100 µm to 250 µm, 100 µm to 200 µm, 100 µm to 180 µm, 100 µm to 150 µm, 120 µm to 200 µm, 140 µm to 200 µm, or 140 µm to 160 µm.

Furthermore, the separator provided in the electrode assembly for the lithium secondary battery according to the present invention is not particularly limited as long as it is an insulating thin film that is commonly used in the art, is interposed between the positive electrode and the negative electrode, and has high ion permeability and mechanical strength, and specifically, a sheet or non-woven fabric made of chemical-resistant and hydrophobic polypropylene, glass fiber, polyethylene, or the like may be used, and in some cases, a composite separator in which a porous polymer base material such as a sheet or nonwoven fabric is coated with inorganic particles/organic particles by an organic binder polymer may be used. When a solid electrolyte such as a polymer or the like is used as an electrolyte, the solid electrolyte may also serve as a separator. In addition, pores of the separator may have an average diameter of 0.01 to 10 µm and an average thickness of 5 to 300 µm. Further, since the separator has an area greater than that of each of the positive electrode and the negative electrode, it is possible to prevent the positive electrode mixture layer and the negative electrode mixture layer from coming into contact with each other. Specifically, since the positive electrode mixture layer is formed to have an area smaller than that of the negative electrode mixture layer to prevent a short inside the battery, the separator may be provided to be 101% to 110% wide based on the area of the negative electrode mixture layer, and may be provided to have a length that is about 0.5 to 2 mm longer than the length of the negative electrode mixture layer.

### Method of manufacturing lithium secondary battery

Further, in an embodiment, the present invention provides a method of manufacturing a lithium secondary battery, including inserting an electrode assembly including a positive electrode, a negative electrode, and a separator positioned between the positive electrode and the negative electrode into a case of the lithium secondary battery and placing a detection probe containing a metal oxide having a potential plateau of 1.3 V to 1.8 V on a side surface of a negative electrode mixture layer of the negative electrode to assemble the lithium secondary battery, filling the case of the assembled lithium secondary battery with an electrolyte, charging the lithium secondary battery filled with the electrolyte, and measuring a potential of the detection probe provided in the lithium secondary battery.

The method of manufacturing the lithium secondary battery according to the present invention is a method of manufacturing the above-described lithium secondary battery according to the present invention, and the method may be performed by inserting an electrode assembly including a positive electrode, a negative electrode, and a separator positioned between the positive electrode and the negative electrode into a case of the lithium secondary battery and placing a detection probe on a side surface of a negative electrode mixture layer introduced into the case of the lithium secondary battery to assemble the lithium secondary battery, then injecting an electrolyte into the assembled lithium secondary battery, performing initial charging of the battery, and then measuring a potential of the detection probe.

When the mixture layers of the positive electrode and the negative electrode included in the electrode assembly are misaligned during lamination, lithium metal is deposited on the side surface of the negative electrode mixture layer during initial charging. In the present invention, a detection probe having an SoC of 40% to 60% may be introduced on the side surface of the negative electrode mixture layer and the potential of the detection probe during initial charging of the secondary battery may be measured, and thus the lithium metal may be detected in real time in a non-destructive manner.

Here, the detection probe may be separately charged after being disposed on the side surface of the negative electrode mixture layer and before the lithium secondary battery is charged, that is, before the electrode assembly is charged. Specifically, when the detection probe is introduced on the side surface of the negative electrode mixture layer, is electrically connected to the positive electrode, and then the assembly and electrolyte filling of the lithium secondary battery are completed, the charging of the lithium secondary battery may be performed so that only the detection probe satisfies the condition that the SoC ranges from 40% to 60% before the initial charging of the lithium secondary battery.

Further, the method of manufacturing the lithium secondary battery according to the present invention may further include, after the measuring of the potential of the detection probe, when the measured potential of the detection probe exceeds 2.0 V, determining that the lithium secondary battery is defective. The pre-charged detection probe has a potential plateau of 1.3 V to 1.8 V, and the potential may rapidly increase when the deposited lithium metal comes into contact with a surface thereof. Therefore, in the method of manufacturing the lithium secondary battery according to the present invention, after the measuring of the potential of the detection probe, when the potential of the detection probe exceeds 2.0 V, it means that the lithium metal is deposited on the negative electrode of the electrode assembly, and thus it may be determined that a target lithium secondary battery is defective, and when the potential of the detection probe is 2.0 V or less, the lithium secondary battery may be determined as normal.

Meanwhile, since the configuration of the electrode assembly inserted into the case of the secondary battery and the configuration of the detection probe are the same as the configuration described above for the lithium secondary battery, detailed descriptions thereof will be omitted.

Further, the electrolyte injected into the case of the secondary battery may consist of an electrolyte and a lithium salt, and a non-aqueous organic solvent, an organic solid electrolyte, an inorganic solid electrolyte, or the like may be used as the electrolyte.

Examples of the non-aqueous organic solvent may include an aprotic organic solvent such as N-methyl-2-pyrrolidinone, ethylene carbonate (EC), propylene carbonate, butylene carbonate, dimethyl carbonate (DMC), diethyl carbonate (DEC), gamma-butyrolactone, 1,2-dime ethoxyethane, tetrahydroxy franc, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxymethane, dioxolane derivatives, sulfolane, methyl sulfolane, 1,3-dimethyl-2-imidazolidinone, propylene carbonate derivatives, tetrahydrofuran derivatives, ether, methyl propionate, ethyl propionate, etc.

Examples of the organic solid electrolyte may include polyethylene derivatives, polyethylene oxide derivatives, polypropylene oxide derivatives, phosphoric acid ester polymers, poly agitation lysine, polyester sulfide, polyvinyl alcohol, polyvinylidene fluoride, polymeric materials containing ionic dissociation groups, etc.

Examples of the inorganic solid electrolyte may include nitrides, halides, sulfates, etc. of Li, such as Li₃N, LiI, Li₅Ni₂, Li₃N-LiI-LiOH, LiSiO₄, LiSiO₄-LiI-LiOH, Li₂SiS₃, Li₄SiO₄, Li₄SiO₄-LiI-LiOH, Li₃PO₄-Li₂S-SiS₂, or the like.

The lithium salt is a material that is easily soluble in a non-aqueous electrolyte, and examples of the lithium salt may include LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, chloroborane lithium, lithium lower aliphatic carboxylates, lithium 4- phenylboronate, imide, etc.

Further, for the purpose of improving charging and discharging characteristics, flame retardancy, etc., pyridine, triethylphosphite, triethanolamine, cyclic ether, ethylene diamine, n-glyme, hexaphosphoric acid triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride, etc. may be added to the electrolyte. In some cases, in order to impart incombustibility, a halogen-containing solvent such as carbon tetrachloride, ethylene trifluoride, etc. may be further included, and in order to improve high-temperature storage characteristics, carbon dioxide gas may be further included and fluoroethylene carbonate (FEC), propene sultone (PRS), etc. may be further included.

### Lithium detection device

Furthermore, in an embodiment, the present invention provides a lithium detection device capable of detecting lithium metal deposited on a negative electrode in a non-destructive manner during initial charging of a lithium secondary battery.

The lithium detection device may be electrically connected to the lithium secondary battery to track a change in potential of a detection probe in real time, and it is possible to determine whether lithium metal is deposited on the negative electrode during initial charging through the tracked change in potential.

To this end, the lithium detection device may include a support unit on which the lithium secondary battery of the present invention described above is mounted, and a control unit which is electrically connected to the lithium secondary battery mounted on the support unit to control the initial charging of the lithium secondary battery according to the potential of the detection probe and determine whether lithium metal is deposited.

More specifically, the lithium secondary battery may further include a battery management system (BMS) which is electrically connected to the detection probe to measure the potential of the detection probe in real time, and the BMS may be electrically connected to the control unit of the lithium detection device to transmit the measured potential of the detection probe to the control unit. When the potential of the detection probe received from the BMS exceeds a preset value, for example, 2.0 V, 2.1 V, 2.2 V, 2.3 V, 2.4 V, or 2.5 V, the control unit may determine that lithium metal is deposited on the negative electrode of the lithium secondary battery and determine that the target lithium secondary battery is defective, and when the potential of the detection probe reaches 1.3 V to 1.8 V without a rapid change in potential of the detection probe, the control unit may determine the target lithium secondary battery as a normal lithium secondary battery and terminate the initial charging of the lithium secondary battery. Here, the rapid change in potential of the detection probe may mean that the change in potential of the detection probe is 0.5 V or more per unit time during which initial charging is performed, for example, 30±5 second intervals during which initial charging is performed.

Further, the lithium detection device may further include an electrolyte injection unit for injecting an electrolyte into the assembled lithium secondary battery before the initial charging of the lithium secondary battery, and the electrolyte injection unit may have the same configuration as a device commonly used in the art to inject an electrolyte into the lithium secondary battery.

The lithium detection device according to the present invention may be used as a device/equipment used in an initial activation process or may be used to be additionally mounted in the manufacture of the lithium secondary battery, and/or may be used as a test device/equipment when the lithium secondary battery is developed.

### [Mode for Carrying Out the Invention]

Hereinafter, the present invention will be described in more detail with reference to example and experimental examples.

However, example and experimental examples described below are merely intended to illustrate the present invention, and the content of the present invention is not limited to the examples and experimental examples described below.

### Preparation Examples 1 to 4. Preparation of detection probe

N-methyl-2-pyrrolidone was injected into a reactor, and 98 parts by weight of a metal oxide of Table 1 below with respect to a solid content and 2 parts by weight of PVdF were added to the reactor and mixed to prepare a slurry. Separately, a copper conductive wire having an average diameter of 120±10 µm was prepared, and a surface of the copper wire was coated with the slurry prepared above and then dried at 130 °C for 1 hour to prepare a detection probe (average diameter: 220±10 µm).

**[Table 1]**

| | Metal oxide | Potential plateau |
|---|---|---|
| Preparation Example 1 | Li₄Ti₅O₁₂ | 1.5±0.1 V |
| Preparation Example 2 | TiO₂ | 1.7±0.1 V |
| Preparation Example 3 | MnO₂ | 1.25±0.1 V |
| Preparation Example 4 | Li₂MnO₄ | 2.9±0.1V |

### Examples 1 and 2 and Comparative Examples 1 and 2. Manufacture of lithium secondary battery

In order to form a positive electrode mixture layer, 94 parts by weight of LiNi_{0.8}Co_{0.1}Mn_{0.1}O₂, which is a positive electrode active material, 3 parts by weight of carbon black, which is a conductive material, and 3 parts by weight of PVdF, which is a binder, were weighed and added, and mixed at 3,000 rpm for 60 minutes to prepare a positive electrode slurry. The prepared positive electrode slurry was applied onto one surface of an aluminum current collector, dried at 100 °C, and then rolled to manufacture a positive electrode. In this case, the total thickness of the positive electrode mixture layer was 130 µm, and the total thickness of the manufactured positive electrode was about 200 µm.

Further, 99 parts by weight of natural graphite and silicon (SiOₓ, here 1≤x≤2) particles (94.05 parts by weight and 4.95 parts by weight, respectively), which are negative electrode active materials, and 1 parts by weight of styrene butadiene rubber (SBR), which is a binder, were prepared, and a negative electrode slurry was prepared in the same manner as the method of preparing the positive electrode slurry. In this case, as the graphite used in the preparation of the negative electrode mixture layer, natural graphite (average particle size: 0.01 to 0.5 µm) was used, and silicon (SiOₓ) particles having an average particle size of 0.9 to 1.1 µm was used. The prepared negative electrode slurry was applied onto one surface of a copper current collector, dried at 100 °C, and rolled to manufacture a negative electrode. In this case, the total thickness of the negative electrode mixture layer was 150 µm, and the total thickness of the manufactured negative electrode was about 250 µm.

Then, a separator (thickness: about 16 µm) made of a porous polyethylene (PE) film was interposed between the manufactured positive electrode and negative electrode, and inserted into a battery pouch, and then a detection probe prepared in each of Preparation Examples was disposed on a side surface of the negative electrode mixture layer, and electrically connected to the positive electrode for charging of the detection probe. In this case, positions at which the detection probes were disposed are shown in Table 2 below with reference to FIG. 3.

Thereafter, E2DVC serving as an electrolyte was introduced into the battery pouch to manufacture a full-cell type lithium secondary battery. Here, the "E2DVC" is a type of carbonate-based electrolyte, and is a solution obtained by mixing lithium hexafluorophosphate (LiPF₆, 1.0 M) and vinyl carbonate (VC, 2 wt%) in a mixture of EC:DMC:DEC=1:1:1 (volume ratio).

**[Table 2]**

| | Positions of detection probes |
|---|---|
| Example 1 | Position of ⓒ of FIG. 3 |
| Example 2 | Position of ⓑ and ⓑ'' of FIG. 3 |
| Comparative Example 1 | No detection probe |
| Comparative Example 2 | Position of ⓓ of FIG. 3 |

### Example 3 and Comparative Examples 3 and 4. Manufacture of lithium secondary battery

Lithium secondary batteries were manufactured in the same manner as in Example 1, except that the detection probes prepared in Preparation Examples 2 to 4 as shown in Table 3 below were used instead of using the detection probe prepared in Preparation Example 1.

**[Table 3]**

| | Type of detection probe |
|---|---|
| Example 3 | Electrode of Preparation Example 2 |
| Comparative Example 3 | Electrode of Preparation Example 3 |
| Comparative Example 4 | Electrode of Preparation Example 4 |

### Experimental Example.

In order to evaluate the safety of the lithium secondary battery according to the present invention, the following experiment was performed.

First, except that a positive electrode mixture layer and a negative electrode mixture layer were laminated on a separator so as to be misaligned to prepare an electrode assembly and that a detection probe was disposed on a portion in which the mixture layers were laminated misaligned, lithium secondary batteries in Examples 4 to 6 and Comparative Examples 5 to 8 were manufactured in the same manner as in Examples 1 to 3 and Comparative Examples 1 to 4, respectively. In addition, in order to check the lithium metal deposition caused by the misalignment during the lamination of the positive electrode mixture layer and the negative electrode mixture layer and the effect of the lithium metal detection electrode, a lithium secondary battery in which the positive electrode mixture layer and the negative electrode mixture layer were not misaligned was separately prepared as a control group.

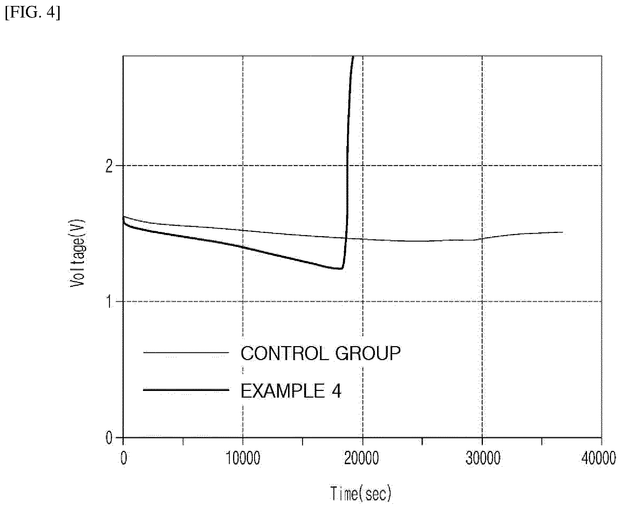

Then, a change in potential of the detection probe provided in each lithium secondary battery was observed while performing charging so that the SoC of the detection probe provided in each prepared lithium secondary battery became 40% to 60% and performing initial charging for each lithium secondary battery. In this case, the initial charging was performed at a temperature of 25 °C with a charging current of 0.3 C to a charging termination voltage of 4.2 to 4.25 V, and performed until a current density reached 0.02 C at the termination voltage. Further, in the case in which the potential of the detection probe was observed, when the potential rapidly increases and exceeds 2.0 V, it is expressed as "O," and after the initial charging of the lithium secondary battery was terminated, the battery was disassembled to determine whether lithium metal was deposited on the negative electrode. Results of the measurement are shown in Table 4 and FIG. 4 below.

**[Table 4]**

| | Detection probe configuration | Misalignment of electrode mixture layer | Lithium metal detection evaluation | |
|---|---|---|---|---|
| | | | Whether exceeds 2.0 V | Whether lithium metal is deposited |
| Control group | Same as Example 1 | X | X | X |
| Example 4 | Same as Example 1 | O | O | O |
| Example 5 | Same as Example 2 | O | O | O |
| Example 6 | Same as Example 3 | O | O | O |
| Comparative Example 5 | Same as Comparative Example 1 | O | - | O |
| Comparative Example 6 | Same as Comparative Example 2 | O | X | O |
| Comparative Example 7 | Same as Comparative Example 3 | O | X | O |
| Comparative Example 8 | Same as Comparative Example 4 | O | X | O |

Referring to Table 4 and FIG. 4, it can be seen that the lithium secondary battery according to the present invention can detect the lithium metal deposited on the negative electrode in real time.

Specifically, first, referring to the control group, it was identified that, when the positive electrode mixture layer and the negative electrode mixture layer were laminated misaligned, lithium metal was deposited on the side surface of the negative electrode mixture layer, whereas, when the mixture layers were laminated aligned, lithium metal was not deposited on the side surface of the negative electrode mixture layer.

Further, in the lithium secondary batteries of Examples 4 to 6 according to the present invention, by looking at the negative electrode by disassembling the lithium secondary battery at a time point when the potential of the detection probe containing a metal oxide having a potential plateau of 1.3 to 1.8 V exceeds 2.0 V, it can be identified that lithium metal was deposited on the side surface of the negative electrode mixture layer and came into contact with the detection probe.

On the other hand, in the lithium secondary battery of Comparative Example 5, in which the detection probe is not provided, although the lithium metal was deposited on the side surface of the negative electrode mixture layer, it was difficult to detect a change in the secondary battery in real time. In addition, in the lithium secondary battery of Comparative Example 6, in which the detection probe is positioned on the surface of the mixture layer rather than on the side surface of the negative electrode mixture layer, a short occurred between the negative electrode and the detection probe in the charging and discharging process of the secondary battery, and thus there was a limit in measuring potential. Further, in the lithium secondary batteries of Comparative Example 7 and 8, in which the potential plateau of the metal oxide contained in the detection probe was outside the range of 1.3 to 1.8 V, it was identified that there was a change in the potential plateau when lithium metal deposited on the side surface of the negative electrode mixture layer came into contact with the detection probe, and it was difficult to determine whether lithium metal was deposited in real time because the degree is not large or only the change in potential was generated to correspond to the potential plateau.

According to the above results, it can be seen that, when the positive electrode mixture layer is laminated misaligned on the surface of the negative electrode mixture layer with the separator interposed therebetween in the manufacturing of the lithium secondary battery, lithium metal is deposited on the side surface of the negative electrode mixture layer on which the positive electrode mixture layer is laminated during initial charging of the lithium secondary battery, and it can be seen that, in the lithium secondary battery according to the present invention, by providing the detection probe containing the metal oxide having the potential plateau of 1.3 to 1.8 V on the side surface of the mixture layer the negative electrode, since lithium metal deposited in this way may be checked in real time in a non-destructive manner, it is possible to not only reduce a defect rate during manufacturing, but also improve the degradation of the lithium secondary battery such as capacity loss or the like and increase the lifetime, and it is possible to improve the safety of the lithium secondary battery.

While exemplary embodiments of the present invention and their advantages have been described above in detail, it should be understood by those skilled in the art that various changes, substitutions and alterations may be made herein without departing from the scope of the invention as defined by the following claims.

Therefore, the technical scope of the present invention should not be limited to the contents described in the detailed description of the specification, but should be defined by the appended claims.

### [Description of reference numerals]

- 10:: electrode assembly
- 12:: negative electrode
- 13:: separator
- 30:: electrode tab
- 100 and 200:: lithium secondary battery
- 110:: electrode assembly
- 111 and 211:: positive electrode
- 112 and 212:: negative electrode
- 113 and 213:: separator
- 114 and 214:: welding unit
- 120 and 220:: battery case
- 130 and 230:: electrode tab
- 140 and 240:: detection probe
- S:: exposed positive electrode mixture layer region

## Claims

1. A lithium secondary battery comprising an electrode assembly including a positive electrode, a negative electrode, and a separator positioned between the positive electrode and the negative electrode,
wherein the negative electrode includes a negative electrode current collector and a negative electrode mixture layer, the negative electrode mixture layer being formed between the negative electrode current collector and the separator, and
wherein a detection probe containing a metal oxide has a potential plateau of 1.3 V to 1.8 V is provided on a side surface of the negative electrode mixture layer.

2. The lithium secondary battery of claim 1, wherein the detection probe has a wire structure including a core wire that includes a conductive metal and a metal oxide layer that surrounds the core wire.

3. The lithium secondary battery of claim 1, wherein the detection probe has an average diameter of 10 to 200 µm.

4. The lithium secondary battery of claim 1, wherein an average diameter of the detection probe is smaller than an average thickness of the negative electrode mixture layer.

5. The lithium secondary battery of claim 1, wherein the detection probe is disposed to be spaced 0.1 to 2,000 µm from the side surface of the negative electrode mixture layer.

6. The lithium secondary battery of claim 1, wherein the metal oxide includes an oxide containing one or more metals selected from the group consisting of titanium, vanadium, iron, cobalt, nickel, copper, molybdenum, tungsten, and niobium.

7. The lithium secondary battery of claim 1, wherein the metal oxide includes a lithium titanate compound represented by Chemical Formula 1 below:
[Chemical Formula 1] LiₐTi_{b}M_{c}O_{d}
wherein M is Sn, Cr, Y, Nb, Mg, Zn, Ni, V, Na, K, Ca, Co, Ta, Mo, Zr, Al, Cu, Mn, or Bi, a is an integer satisfying 0.4≤a≤5, b is an integer satisfying 0.5≤b≤5.5, c is an integer satisfying 0≤c≤0.9, and d is an integer satisfying 1.5≤d≤12.5.

8. The lithium secondary battery of claim 1, wherein the detection probe contains a metal oxide charged to a state of charge (SoC) of 40% to 60%.

9. A method of manufacturing a lithium secondary battery, the method comprising:
inserting an electrode assembly including a positive electrode, a negative electrode, and a separator positioned between the positive electrode and the negative electrode into a case of the lithium secondary battery and placing a detection probe containing a metal oxide having a potential plateau of 1.3 V to 1.8 V on a side surface of a negative electrode mixture layer of the negative electrode to assemble the lithium secondary battery;
filling the case of the assembled lithium secondary battery with an electrolyte;
charging the lithium secondary battery filled with the electrolyte; and
measuring a potential of the detection probe provided in the lithium secondary battery.

10. The method of claim 9, wherein the detection probe is charged to a state of charge (SoC) of 40% to 60%.

11. The method of claim 9, further comprising, after the measuring of the potential of the detection probe, when the measured potential of the detection probe exceeds 2.0 V, determining that the lithium secondary battery is defective.
